# EUROPEAN PATENT APPLICATION

(11) **EP 4 550 139 A1**
(43) Date of publication of application: **07.05.2025**
(21) Application number: 24209797.0
(22) Date of filing: 30.10.2024
(51) Int. Cl.: G06F 9/48, G06F 9/455

(54) **OPERATING SYSTEM-BASED VIRTUAL INTERRUPT HANDLING METHOD AND APPARATUS, AND ELECTRONIC DEVICE**

(30) Priority: 31.10.2023 CN 202311437011
(71) Applicant: Nanjing Horizon Information Technology Co., Ltd., Nanjing, Jiangsu 210046 (CN)
(72) Inventor: WANG, Tianliang, Nanjing, 210046 (CN)
(74) Representative: Dehns Germany Partnerschaft mbB

(57) **Abstract**

Disclosed are an operating system-based virtual interrupt handling method and apparatus, and an electronic device, relating to the field of virtualization technologies. The method includes: determining a first virtual central processing unit currently running; determining target configuration information corresponding to an interrupt request from pre-configured interrupt configuration information; and controlling a second virtual central processing unit to execute an interrupt handler by using an interrupt controller based on the first virtual central processing unit and the target configuration information. In technical solutions of this disclosure, the interrupt configuration information is pre-configured, so that there is no need for a VMM to participate in interrupt handling during virtual interrupt handling, which can simplify an interrupt handling process and improve interrupt handling efficiency.

## Description

### FIELD OF THE INVENTION

This disclosure relates to the field of interrupt virtualization technologies, and in particular, to an operating system-based virtual interrupt handling method and apparatus, and an electronic device.

### BACKGROUND OF THE INVENTION

In interrupt virtualization technologies, an interrupt handling process needs to be completed through a user-mode virtual machine manager (VMM). Interrupts of a virtual machine (VM) are injected into a virtual central processing unit (VCPU) of the VM through the VMM, so that the VCPU is enabled to execute an interrupt handler.

### SUMMARY OF THE INVENTION

Generally, interrupt handling through a VMM not only requires multiple switches between an operating system kernel and the VMM, but also requires switches between a VCPU thread and a VMM thread, resulting in a complex interrupt handling process, which affects interrupt handling efficiency.

To resolve the foregoing technical problem, this disclosure provides an operating system-based virtual interrupt handling method and apparatus, and an electronic device, which can simplify an interrupt handling process by pre-configuring interrupt configuration information, thereby improving interrupt handling efficiency.

According to a first aspect of this disclose, an operating system-based virtual interrupt handling method is provided, including:
determining a first virtual central processing unit currently running;
determining target configuration information corresponding to an interrupt request from pre-configured interrupt configuration information; and
controlling a second virtual central processing unit to execute an interrupt handler by using an interrupt controller based on the first virtual central processing unit and the target configuration information.

According to a second aspect of this disclose, an operating system-based virtual interrupt handling apparatus is provided, including:
a first determining module, configured to determine a first virtual central processing unit currently running;
a second determining module, configured to determine target configuration information corresponding to an interrupt request from pre-configured interrupt configuration information; and
a virtual interrupt control module, configured to control a second virtual central processing unit to execute an interrupt handler by using an interrupt controller based on the first virtual central processing unit and the target configuration information.

A third aspect of this disclosure provides a computer readable storage medium. The storage medium stores a computer program, and the computer program is used for implementing the operating system-based virtual interrupt handling method according to the first aspect.

An embodiment in a fourth aspect of this disclosure provides an electronic device, wherein the electronic device includes:
a processor; and
a memory, configured to store a processor-executable instruction, wherein
the processor is configured to read the executable instruction from the memory, and execute the instruction to implement the operating system-based virtual interrupt handling method according to the first aspect.

In the embodiments of this disclosure, the target configuration information corresponding to the interrupt request is determined from the pre-configured interrupt configuration information, and the second virtual central processing unit is controlled to execute the interrupt handler by using the interrupt controller based on the first virtual central processing unit currently running and the target configuration information. Therefore, when obtaining the target configuration information, there is no need to switch between the VMM thread and the VCPU thread, nor between the VMM and the operating system kernel. To be specific, there is no need for the VMM to participate in interrupt handling during virtual interrupt handling, which can simplify an interrupt handling process and improve interrupt handling efficiency.

### BRIEF DESCRIPTION OF THE DRAWINGS

FIG. 1 is a system block diagram of an interrupt handling system according to an exemplary embodiment of this disclosure;
FIG. 2 is a system block diagram of another interrupt handling system according to an exemplary embodiment of this disclosure;
FIG. 3 is a schematic flowchart of an operating system-based virtual interrupt handling method according to an exemplary embodiment of this disclosure;
FIG. 4 is a schematic flowchart of another operating system-based virtual interrupt handling method according to an exemplary embodiment of this disclosure;
FIG. 5 is a schematic flowchart of still another operating system-based virtual interrupt handling method according to an exemplary embodiment of this disclosure;
FIG. 6 is a schematic flowchart of yet another operating system-based virtual interrupt handling method according to an exemplary embodiment of this disclosure;
FIG. 7 is a schematic flowchart of still yet another operating system-based virtual interrupt handling method according to an exemplary embodiment of this disclosure;
FIG. 8 is a schematic flowchart of a further operating system-based virtual interrupt handling method according to an exemplary embodiment of this disclosure;
FIG. 9 is a schematic diagram of a composition and structure of an operating system-based virtual interrupt handling apparatus according to an exemplary embodiment of this disclosure;
FIG. 10 is a schematic diagram of a composition and structure of another operating system-based virtual interrupt handling apparatus according to an exemplary embodiment of this disclosure;
FIG. 11 is a schematic diagram of a composition and structure of still another operating system-based virtual interrupt handling apparatus according to an exemplary embodiment of this disclosure;
FIG. 12 is a schematic diagram of a composition and structure of yet another operating system-based virtual interrupt handling apparatus according to an exemplary embodiment of this disclosure;
FIG. 13 is a schematic diagram of a composition and structure of still yet another operating system-based virtual interrupt handling apparatus according to an exemplary embodiment of this disclosure;
FIG. 14 is a schematic diagram of a composition and structure of a further operating system-based virtual interrupt handling apparatus according to an exemplary embodiment of this disclosure;
FIG. 15 is a schematic diagram of a composition and structure of a still further operating system-based virtual interrupt handling apparatus according to an exemplary embodiment of this disclosure; and
FIG. 16 is a schematic diagram of a composition and structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

Generally, an interrupt in an operating system may be implemented through a hardware part and a software part. The hardware part may include a central processing unit (CPU) and a generic interrupt controller (GIC). The software part may include a microkernel operating system (kernel for short), a VMM, and a VM.

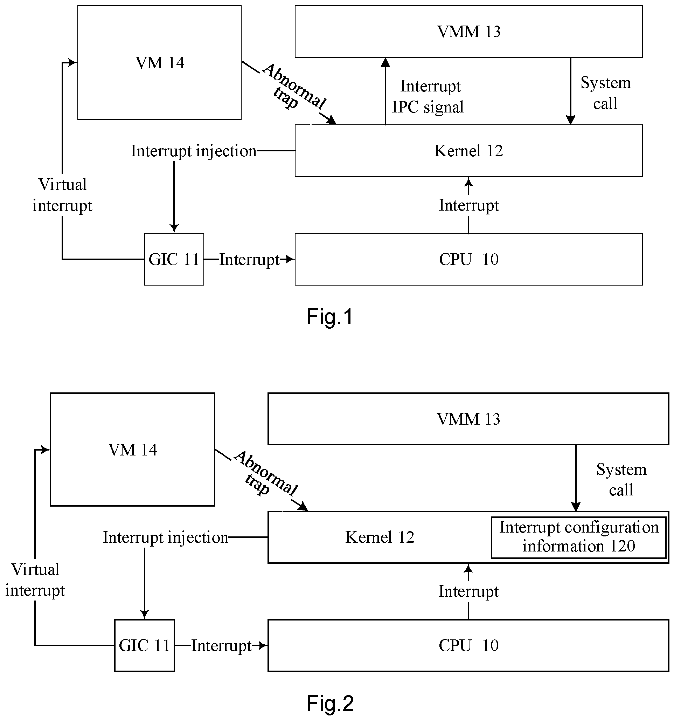

FIG. 1 is a system block diagram of an interrupt handling system according to an exemplary embodiment of this disclosure. As shown in FIG. 1, the hardware part of the interrupt handling system may include a CPU 10 and a GIC 11, and the software part running on the interrupt handling system may include a kernel 12, a VMM 13, and a VM 14. When the interrupt handling system starts running, the kernel 12 runs first, and then the VMM 13 is installed, and finally the VM 14 is created based on the installed VMM and the kernel 12.

In some embodiments, interrupt information corresponding to an interrupt request may be obtained through the VMM 13, and may be written into the GIC 11 based on system call provided by the kernel 12, so as to control a corresponding VCPU to execute an interrupt handler through the GIC 11.

A virtual interrupt handling process is exemplarily described below with reference to FIG. 1.

As shown in FIG. 1, first, the GIC 11 receives an interrupt request (for example, a private peripheral interrupts (PPI) request) transmitted from a data transmission interface (such as a general-purpose input/output (GPIO)) or the CPU 10, and reports the interrupt request to the CPU 10. The CPU 10 reports the interrupt request to the kernel 12. When the interrupt request is received by the kernel 12, if the VM 14 is running, the VM 14 may be trapped into the kernel 12 abnormally.

Subsequently, the kernel 12 reports the interrupt request to the VMM 13 by means of interprocess communication (IPC), so as to notify the VMM 13 to handle the interrupt request. Meanwhile, the VMM 13 suspends the VCPU and waits for completion of interrupt handling. The VMM 13 determines the VCPU for executing the interrupt handler and the interrupt information based on the received interrupt request, and invokes an interrupt injection interface of the kernel 12 to inject the interrupt information into a hardware register of the GIC 11. After the interrupt information is written into the GIC 11, the virtual interrupt is reported to the VM 14 through the GIC 11, so as to control the corresponding VCPU to execute the interrupt handler.

Finally, after the virtual interrupt handling is completed, the VMM 13 notifies the kernel 12 that the virtual interrupt handling has been completed. The kernel 12 reschedules the suspended VCPU to continue running.

The foregoing virtual interrupt handling process not only requires multiple switches between the kernel 12 and the VMM 13 (that is, multiple switches between a kernel state EL2 and a user state EL0 are required), but also requires switches between a VCPU thread and a VMM thread, resulting in a complex interrupt handling process, which affects interrupt handling efficiency.

### Exemplary system

FIG. 2 is a system block diagram of another interrupt handling system according to an exemplary embodiment of this disclosure. As shown in FIG. 2, a hardware part of the interrupt handling system includes a CPU 10 and a GIC 11, and a software part running on the interrupt handling system includes a kernel 12, a VMM 13, and a VM 14.

As shown in FIG. 2, interrupt configuration information 120 may be pre-configured in the kernel 12. The interrupt configuration information 120 includes at least one interrupt type and interrupt information corresponding to all interrupt types. A virtual interrupt handling process is exemplarily described below with reference to FIG. 2.

As shown in FIG. 2, first, the GIC 11 receives an interrupt request and reports the same to the CPU 10, which reports the interrupt request to the kernel 12. When the interrupt request is received by the kernel 12, if the VM 14 is running, the VM 14 may be trapped into the kernel 12 abnormally. Subsequently, the kernel 12 obtains the interrupt information based on the pre-configured interrupt configuration information 120 and writes the interrupt information into a hardware register of the GIC 11, so as to control a corresponding VCPU to execute an interrupt handler.

The interrupt handling process provided in this embodiment of this disclosure includes directly reading the interrupt information from the interrupt configuration information that is pre-configured on the kernel 12. Therefore, there is no need to switch between the VMM thread and the VCPU thread (that is, there is no need to suspend the VCPU), nor between the VMM and an operating system kernel. To be specific, the interrupt handling shown in FIG. 2 does not require the VMM to participate in the interrupt handling. Therefore, an interrupt handling process can be simplified, thereby improving interrupt handling efficiency.

### Exemplary method

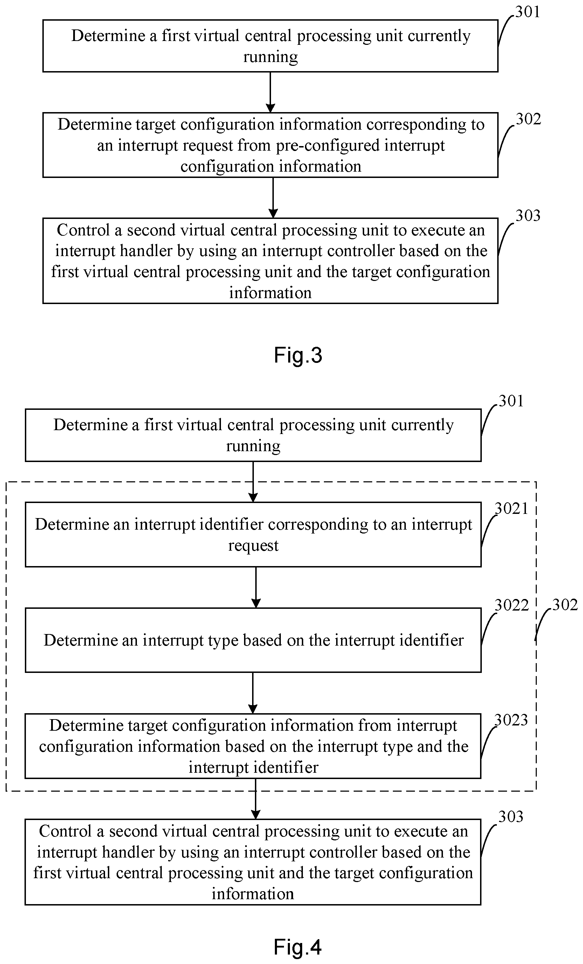

FIG. 3 is a schematic flowchart of an operating system-based virtual interrupt handling method according to an exemplary embodiment of this disclosure. The virtual interrupt handling method may be applied to the interrupt handling system shown in FIG. 2. As shown in FIG. 3, the virtual interrupt handling method may include the following steps 301 to 303.

Step 301. Determine a first virtual central processing unit currently running.

For example, there may be a plurality of virtual central processing units running on the interrupt handling system, and the first virtual central processing unit may be any one of the plurality of virtual central processing units. Taking an example in which there may be three VCPUs running on the interrupt handling system, which respectively are a VCPU 1, a VCPU 2, and a VCPU 3, if the VCPU running on the interrupt handling system is the VCPU 1, the first virtual central processing unit is the VCPU 1.

For example, the first virtual central processing unit currently running may be determined through a kernel. For example, the first virtual central processing unit currently running may be determined through a VCPU query instruction in the kernel.

Step 302. Determine target configuration information corresponding to an interrupt request from pre-configured interrupt configuration information.

For example, the pre-configured interrupt configuration information may include interrupt configuration information for at least one interrupt type that is pre-configured in the kernel. In some examples, the pre-configured interrupt configuration information may include interrupt configuration information for a private peripheral interrupt (PPI) and a shared peripheral interrupt (SPI) that are pre-configured in the kernel. The interrupt type of the interrupt request is not limited in this embodiment of this disclosure, and exemplary description is made in the following embodiments by using an example in which interrupt types include the PPI and the SPI.

For example, the target configuration information corresponding to the interrupt request may be queried from the pre-configured interrupt configuration information through an interrupt configuration query instruction in the kernel.

Step 303. Control a second virtual central processing unit to execute an interrupt handler by using an interrupt controller based on the first virtual central processing unit and the target configuration information.

For example, the second virtual central processing unit may be the first virtual central processing unit, or may be a virtual central processing unit different from the first virtual central processing unit. Whether the second virtual central processing unit is the first virtual central processing unit is related to a type of the interrupt request.

In some examples, that the type of the interrupt request is the PPI is used as an example. Since, in the case of a PPI-type interrupt, an interrupt handler is executed by the virtual central processing unit currently running, if the interrupt request is a PPI request, the second virtual central processing unit is the first virtual central processing unit.

For example, if the first virtual central processing unit currently running is the VCPU 1 and the interrupt request is the PPI request, the second virtual central processing unit is the VCPU 1.

In some other examples, that the type of the interrupt request is the SPI is used as an example. Since, in the case of a an SPI-type interrupt, an interrupt handler is executed by a VCPU (that is, the second virtual central processing unit) in the target configuration information, the VCPU in the target configuration information may be same as or different from the first virtual central processing unit currently running. In other words, the second virtual central processing unit may be the first virtual central processing unit, or may be a virtual central processing unit different from the first virtual central processing unit.

For example, that the first virtual central processing unit currently running is the VCPU 1 and the interrupt request is the SPI request is used as an example. If the target configuration information includes the VCPU 2, the second virtual central processing unit is the VCPU 2; and if the target configuration information includes the VCPU 1, the second virtual central processing unit is the VCPU 1.

For example, the interrupt information in the target configuration information may be written into the interrupt controller through the kernel, and the interrupt controller controls the second virtual central processing unit to execute the interrupt handler based on the interrupt information.

In this embodiment of this disclosure, the target configuration information is determined from the pre-configured interrupt configuration information, and the second virtual central processing unit is controlled to execute the interrupt handler by using the interrupt controller based on the determined target configuration information and the first virtual central processing unit currently running. Therefore, there is no need to switch between a VMM thread and a VCPU thread, nor between a VMM and an operating system kernel. To be specific, there is no need for the VMM to participate in interrupt handling during virtual interrupt handling. Therefore, an interrupt handling process can be simplified, thereby improving interrupt handling efficiency.

As shown in FIG. 4, on the basis of the embodiment shown in FIG. 3, step 302 may include the following steps 3021 to 3023.

Step 3021. Determine an interrupt identifier corresponding to the interrupt request.

For example, the interrupt identifier may be an interrupt number, and different types of interrupt requests may correspond to different interrupt numbers. In some examples, different types of interrupts correspond to different interrupt identifier ranges (such as interrupt number ranges). For example, an interrupt number range of the PPI is from 17 to 31, and an interrupt number range of the SPI is from 32 to 1020.

For example, the interrupt number of the interrupt request may be read from the GIC through an interrupt identifier obtaining instruction in the kernel.

Step 3022. Determine an interrupt type based on the interrupt identifier.

For example, since different interrupt types correspond to different interrupt identifiers, an interrupt identifier range where the interrupt identifier is located may be queried, and the interrupt type corresponding to the interrupt identifier may be determined based on the interrupt identifier range.

For example, that the interrupt number is 20 and the interrupt number range of the PPI is from 17 to 31 is used as an example. Since the interrupt number 20 is within the interrupt number range from 17 to 31, it may be determined that an interrupt type corresponding to the interrupt number 20 is PPI.

Step 3023. Determine the target configuration information from the interrupt configuration information based on the interrupt type and the interrupt identifier.

In some examples, step 3023 may include: determining sub-configuration information corresponding to the interrupt type from the interrupt configuration information based on the interrupt type; and determining the target configuration information from the sub-configuration information corresponding to the interrupt type based on the interrupt identifier.

For example, if the interrupt type is PPI, the sub-configuration information includes PPI sub-interrupt configuration information; and if the interrupt type is SPI, the sub-configuration information includes SPI sub-interrupt configuration information.

For example, the PPI sub-interrupt configuration information may only include interrupt information required for handling the interrupt request. In some examples, the interrupt information may include at least one of an interrupt number, an interrupt priority, a group, and a hardware interrupt identifier.

For example, since PPI is a private peripheral interrupt, each VCPU in a plurality of VCPUs that can run in the interrupt handling system corresponds to a group of PPI sub-interrupt configuration information. To be specific, the PPI sub-interrupt configuration information includes interrupt information of each VCPU, and the interrupt information of each VCPU includes interrupt information of each interrupt identifier within an interrupt identifier range of the PPI. The interrupt information of each VCPU may be correspondingly stored in context of each VCPU.

For example, that the interrupt number range of the PPI is from 17 to 31, and the plurality of VCPUs that can run in the interrupt handling system include the VCPU 1 to the VCPU 3 is used as an example. The PPI sub-interrupt configuration information in the interrupt configuration information includes a group of PPI sub-interrupt configuration information corresponding to the VCPU 1, a group of PPI sub-interrupt configuration information corresponding to the VCPU 2, and a group of PPI sub-interrupt configuration information corresponding to the VCPU 3. A group of PPI-sub interrupt configuration information corresponding to each VCPU includes interrupt information of each interrupt number from interrupt numbers 17 to 31.

For example, since SPI is a shared interrupt, the plurality of VCPUs that can run in the interrupt handling system may share a group of SPI sub-interrupt configuration information. To be specific, the SPI sub-interrupt configuration information includes interrupt information corresponding to each interrupt identifier within an interrupt identifier range of the SPI, and information of the VCPU corresponding to each interrupt identifier, which is used to execute the interrupt handler(which is also known as information of the second virtual central processing unit).

For example, that the interrupt number range of the SPI is from 32 to 1020, and the plurality of VCPUs that can run in the interrupt handling system include the VCPU 1 to the VCPU 3 is used as an example. The SPI sub-interrupt configuration information in the interrupt configuration information includes interrupt information corresponding to each interrupt number from interrupt numbers 32 to 1020, and information of the VCPU corresponding to each interrupt number, which is used to execute the interrupt handler.

For example, when the interrupt configuration information includes both the PPI sub-interrupt configuration information and the SPI sub-interrupt configuration information, if the interrupt type is the PPI, it may be determined through the kernel that the sub-configuration information corresponding to the interrupt type is the PPI sub-interrupt configuration information; and then sub-interrupt configuration information corresponding to the first virtual central processing unit currently running may be determined from the PPI sub-interrupt configuration information; and finally, the target configuration information may be determined from the sub-interrupt configuration information corresponding to the first virtual central processing unit based on the interrupt identifier.

For example, if the interrupt type is the PPI, after the first virtual central processing unit currently running is determined, it may be first determined based on the interrupt type that the sub-configuration information corresponding to the interrupt type is the PPI sub-interrupt configuration information; and then, context of the first virtual central processing unit may be read from the PPI sub-interrupt configuration information through the kernel; and subsequently, the target configuration information corresponding to a PPI identifier may be queried in the context of the first virtual central processing unit.

In some other examples, if the interrupt type is the SPI, it may be first determined, through the kernel and based on the interrupt type, that the sub-configuration information corresponding to the interrupt type is the SPI sub-interrupt configuration information, and then the target configuration information corresponding to the interrupt identifier may be queried in the SPI sub-interrupt configuration information based on the interrupt identifier.

In this embodiment of this disclosure, the sub-configuration information corresponding to the interrupt type is determined from the interrupt configuration information; and the target configuration information is determined from sub-configuration information corresponding to the interrupt identifier based on the interrupt identifier. Therefore, it can be ensured that the determined sub-configuration information corresponds to the interrupt type in the interrupt request, and that the target configuration information corresponds to the interrupt identifier in the interrupt request. Therefore, the target configuration information corresponding to the interrupt request can be accurately obtained.

In this embodiment of this disclosure, the interrupt type is determined through the interrupt identifier corresponding to the interrupt request, and the target configuration information is determined from the interrupt configuration information based on the interrupt type. Since the interrupt configuration information is pre-configured information, during the process of determining the target configuration information, there is no need to switch between the VMM thread and the VCPU thread, nor between the VMM and the operating system kernel. In other words, there is no need for the VMM to participate in the interrupt handling during the determining of the target configuration information. In this way, the process of determining the target configuration information can be simplified, and efficiency of determining the target configuration information can be improved, thereby improving the interrupt handling efficiency.

In some embodiments, since, in the case of the SPI-type interrupt, the interrupt handler is executed by the VCPU in the target configuration information, it is needed to determine whether the VCPU in the target configuration information is running, that is, to determine whether the VCPU in the target configuration information is a currently running VCPU, and to execute the interrupt handler through the currently running VCPU when it is determined that the VCPU in the target configuration information is the currently running VCPU.

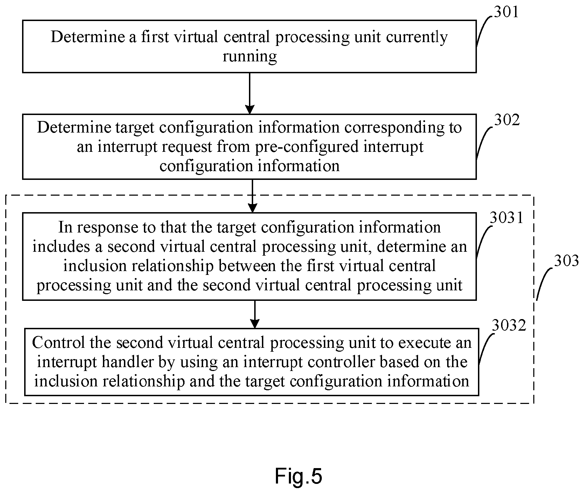

As shown in FIG. 5, on the basis of the embodiment shown in FIG. 3, step 303 includes the following steps 3031 and 3032.

Step 3031. In response to that the target configuration information includes the second virtual central processing unit, determine an inclusion relationship between the first virtual central processing unit and the second virtual central processing unit.

For example, whether the target configuration information includes the second virtual central processing unit may be determined through the kernel. When it is determined that the target configuration information includes the second virtual central processing unit, it is determined whether the first virtual central processing unit and the second virtual central processing unit are the same, so as to obtain the inclusion relationship between the first virtual central processing unit and the second virtual central processing unit.

In some examples, if the second virtual central processing unit is the first virtual central processing unit, it is determined that the inclusion relationship between the first virtual central processing unit and the second virtual central processing unit is inclusion. In other words, if the second virtual central processing unit is different from the first virtual central processing unit, it is determined that the inclusion relationship between the first virtual central processing unit and the second virtual central processing unit is exclusion.

Step 3032. Control the second virtual central processing unit to execute the interrupt handler by using the interrupt controller based on the inclusion relationship and the target configuration information.

For example, when the inclusion relationship indicates that the second virtual central processing unit is the first virtual central processing unit, it indicates that the first virtual central processing unit currently running is the virtual central processing unit that executes the interrupt handler. Therefore, the second virtual central processing unit may be directly controlled to execute the interrupt handler by using the interrupt controller based on the target configuration information. When the inclusion relationship indicates that the second virtual central processing unit is different from the first virtual central processing unit, it indicates that the first virtual central processing unit currently running is not the virtual central processing unit that executes the interrupt handler. Therefore, the target configuration information may be stored first, and then when the second virtual central processing unit that executes the interrupt handler is running, the second virtual central processing unit may be controlled to execute the interrupt handler by using the interrupt controller.

In the embodiments of this disclosure, the inclusion relationship between the first virtual central processing unit and the second virtual central processing unit is determined, and the second virtual central processing unit is controlled to execute the interrupt handler by using the interrupt controller based on the inclusion relationship and the target configuration information. In the embodiments of this disclosure, it is determined whether the currently running VCPU is the VCPU that executes the interrupt handler, and the second virtual central processing unit is controlled to execute the interrupt handler by using the interrupt controller based on a determining result, so that the virtual interrupt handling efficiency can be further improved.

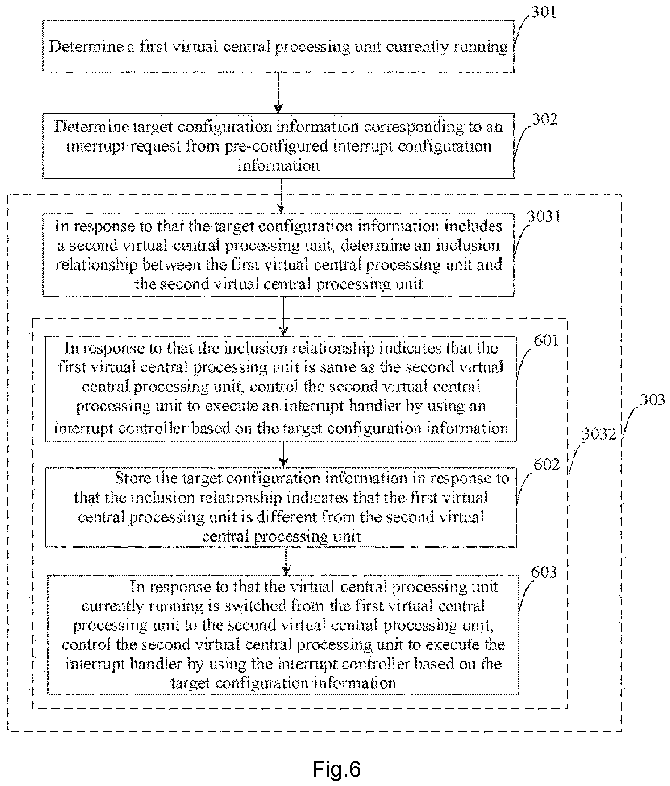

On the basis the foregoing embodiments shown in FIG. 6, step 3032 may include the following steps 601 to 603.

Step 601. In response to that the inclusion relationship indicates that the first virtual central processing unit is same as the second virtual central processing unit, control the second virtual central processing unit to execute the interrupt handler by using the interrupt controller based on the target configuration information.

In some embodiments, that the first virtual central processing unit is same as the second virtual central processing unit indicates that the second virtual central processing unit is the first virtual central processing unit. When the second virtual central processing unit is the first virtual central processing unit, first interrupt information in the target configuration information may be determined and may be written into a register in the interrupt controller. The second virtual central processing unit is controlled to execute the interrupt handler by using the interrupt controller.

In some examples, if the second virtual central processing unit is the first virtual central processing unit, the first virtual central processing unit currently running may execute the interrupt handler. Therefore, the first interrupt information may be read from the target configuration information, and then may be written into a hardware register in the interrupt controller based on the kernel. The second virtual central processing unit is controlled to execute the interrupt handler by using the interrupt controller.

In the embodiments of this disclosure, the first interrupt information in the target configuration information is determined and is written into the register in the interrupt controller, so that the second virtual central processing unit is controlled to execute the interrupt handler by using the interrupt controller. In this way, the virtual interrupt handling may be completed based on the first interrupt information.

In the embodiments of this disclosure, when the second virtual central processing unit is same as the first virtual central processing unit, the second virtual central processing unit is controlled to execute the interrupt handler by using the interrupt controller based on the target configuration information. In this case, a problem of an interrupt handling error caused by that the current running virtual central processing unit is not the virtual central processing unit that executes the interrupt handler may be avoided, thereby further improving handling efficiency for the interrupt request.

Step 602. Store the target configuration information in response to that the inclusion relationship indicates that the first virtual central processing unit is different from the second virtual central processing unit.

For example, if the second virtual central processing unit is not the first virtual central processing unit, when the first virtual central processing unit currently running cannot execute the interrupt handler, the target storage information needs to be first stored in context of the second virtual central processing unit through the kernel. Thus, when the virtual central processing unit currently running is switched to the second virtual central processing unit that can execute the interrupt handler, the second virtual central processing unit is controlled to execute the interrupt handler by using the interrupt controller.

Step 603. In response to that the virtual central processing unit currently running is switched from the first virtual central processing unit to the second virtual central processing unit, control the second virtual central processing unit to execute the interrupt handler by using the interrupt controller based on the target configuration information.

For example, the first interrupt information in the target configuration information may be determined when the virtual central processing unit currently running is switched from the first virtual central processing unit that cannot execute the interrupt handler to the second virtual central processing unit that can execute the interrupt handler. The first interrupt information is written into the register in the interrupt controller, and the interrupt controller controls the second virtual central processing unit to execute the interrupt handler.

In the embodiments of this disclosure, the target configuration information is saved when the second virtual central processing unit is not the first virtual central processing unit. Moreover, when the virtual central processing unit currently running is switched from the first virtual central processing unit to the second virtual central processing unit, the second virtual central processing unit is controlled to execute the interrupt handler by using the interrupt controller based on the target configuration information. Therefore, it can be ensured that the virtual interrupt is handled by the virtual central processing unit that executes the interrupt handle, thereby further improving the interrupt handling efficiency.

In some embodiments, since, in the case of the PPI-type interrupt, an interrupt handler is executed by the currently running VCPU, the interrupt service program may be directly handled by the current running VCPU without determining whether the current running virtual central processing unit is the virtual central processing unit that executes the interrupt handler.

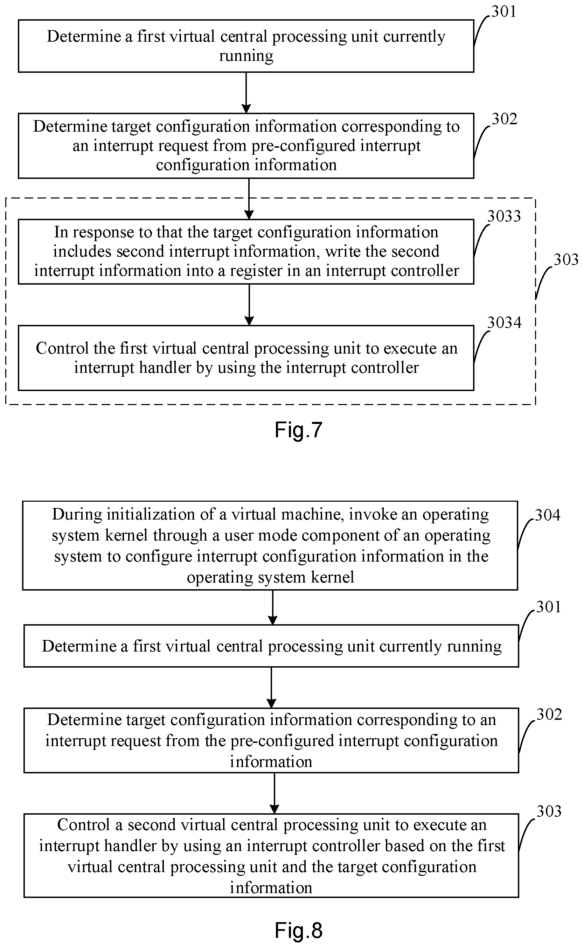

As shown in FIG. 7, on the basis of the embodiment shown in FIG. 1, step 303 includes the following steps 3033 and 3034.

Step 3033. In response to that the target configuration information includes second interrupt information, write the second interrupt information into a register in the interrupt controller.

For example, whether the target configuration information includes the second interrupt information may be determined through the kernel. If it is determined that the target configuration information includes the second interrupt information, the second interrupt information is written into the register in the interrupt controller through the kernel. In some examples, the target configuration information may only include second interrupt configuration information.

Step 3034. Control the first virtual central processing unit to execute the interrupt handler by using the interrupt controller.

The second virtual central processing unit and the first virtual central processing unit are a same virtual central processing unit.

In the embodiments of this disclosure, if the target configuration information includes the second interrupt information, the second interrupt information is written into the register in the interrupt controller, and the first virtual central processing unit is controlled to execute the interrupt handler by using the interrupt controller. In the case of PPI-type interrupt, an interrupt handler is executed by the current running VCPU, so there is no need to determine whether the current running virtual central processing unit is the virtual central processing unit that executes the interrupt handler. The first virtual central processing unit may be directly controlled by the interrupt controller to execute the interrupt handler when the target configuration information includes the second interrupt information, so that the handling efficiency for the interrupt request can be further improved.

As shown in FIG. 8, on the basis of the embodiments shown in FIG. 3, before step 301, the virtual interrupt handling method further includes step 304.

Step 304. During initialization of a virtual machine, invoke an operating system kernel through a user mode component of an operating system to configure the interrupt configuration information in the operating system kernel.

For example, the user mode component may include the VMM. The initialization of the virtual machine includes a virtualization process of creating the VM based on the kernel and the VMM.

For example, during virtual initialization, an interface provided by the operating system kernel may be invoked through the VMM to configure interrupt configuration information for various types of interrupts in the operating system kernel.

In the embodiments of this disclosure, during the initialization of the virtual machine, the operating system kernel is invoked through the user mode component of the operating system to configure the interrupt configuration information in the operating system kernel. In this way, when the interrupt request is handled, relevant configuration information may be obtained from the operating system kernel rather than from the user mode component, thus avoiding switches between the VMM thread and the VCPU thread and switches between the VMM and the operating system kernel, that is, preventing the VMM from participating in the interrupt handling. In this way, the process of determining the target configuration information can be simplified, and efficiency of determining the target configuration information can be improved, thereby improving the interrupt handling efficiency.

### Exemplary apparatus

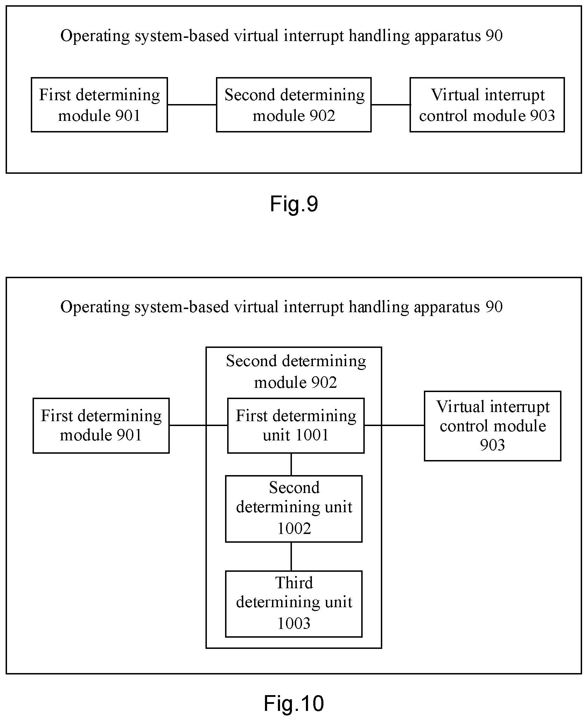

FIG. 9 is a schematic diagram of a composition and structure of an operating system-based virtual interrupt handling apparatus according to an exemplary embodiment of this disclosure. As shown in FIG. 9, an operating system-based virtual interrupt handling apparatus 90 may include a first determining module 901, a second determining module 902, and a virtual interrupt control module 903.

The first determining module 901 is configured to determine a currently running first virtual central processing unit.

The second determining module 902 is configured to determine target configuration information corresponding to an interrupt request from pre-configured interrupt configuration information.

The virtual interrupt control module 903 is configured to control a second virtual central processing unit to execute an interrupt handler by using an interrupt controller based on the first virtual central processing unit and the target configuration information.

In some embodiments, as shown in FIG. 10, on the basis of the embodiment shown in FIG. 9, the second determining module 902 may include a first determining unit 1001, a second determining unit 1002, and a third determining unit 1003.

The first determining unit 1001 is configured to determine an interrupt identifier corresponding to the interrupt request.

The second determining unit 1002 is configured to determine an interrupt type based on the interrupt identifier.

The third determining unit 1003 is configured to determine the target configuration information from the interrupt configuration information based on the interrupt type and the interrupt identifier.

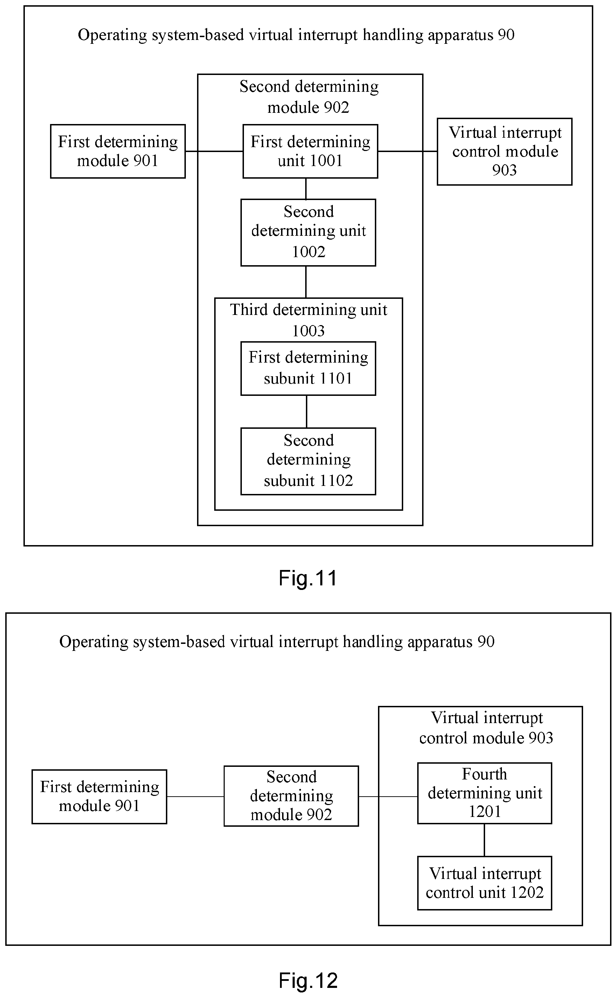

In some embodiments, as shown in FIG. 11, on the basis of the embodiments shown in FIG. 10, the third determining unit 1003 may include a first determining subunit 1101 and a second determining subunit 1102.

The first determining subunit 1101 is configured to determine sub-configuration information corresponding to the interrupt type from the interrupt configuration information based on the interrupt type.

The second determining subunit 1102 is configured to determine the target configuration information from the sub-configuration information corresponding to the interrupt type based on the interrupt identifier.

In some embodiments, as shown in FIG. 12, on the basis of the embodiment shown in FIG. 9, the virtual interrupt control module 903 may include a fourth determining unit 1201 and a virtual interrupt control unit 1202.

The fourth determining unit 1201 is configured to determine an inclusion relationship between the first virtual central processing unit and the second virtual central processing unit in response to that the target configuration information includes the second virtual central processing unit.

The virtual interrupt control unit 1202 is configured to control the second virtual central processing unit to execute the interrupt handler by using the interrupt controller based on the inclusion relationship and the target configuration information.

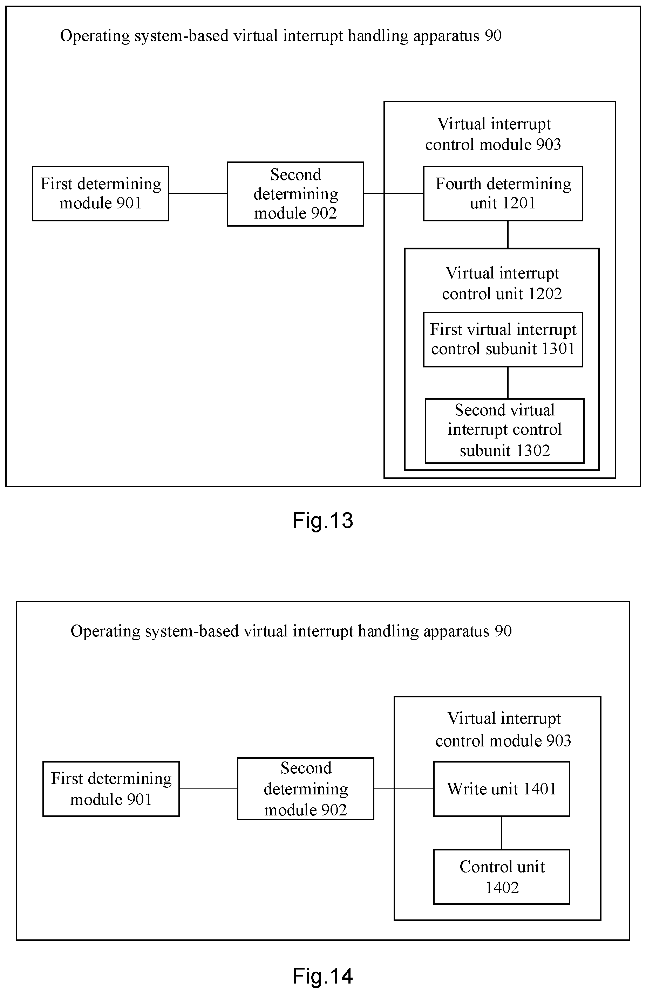

In some embodiments, as shown in FIG. 13, on the basis of the embodiments shown in FIG. 12, the virtual interrupt control unit 1202 may include a first virtual interrupt control subunit 1301 and a second virtual interrupt control subunit 1302.

The first virtual interrupt control subunit 1301 is configured to control, in response to that the inclusion relationship indicates that the first virtual central processing unit is same as the second virtual central processing unit, the second virtual central processing unit to execute the interrupt handler by using the interrupt controller based on the target configuration information.

The second virtual interrupt control subunit 1302 is configured to store the target configuration information in response to that the inclusion relationship indicates that the first virtual central processing unit is different from the second virtual central processing unit; and in response to that the virtual central processing unit currently running is switched from the first virtual central processing unit to the second virtual central processing unit, control the second virtual central processing unit to execute the interrupt handler by using the interrupt controller based on the target configuration information.

In some embodiments, the first virtual interrupt control subunit 1301 and/or the second virtual interrupt control subunit 1302 is configured to determine first interrupt information in the target configuration information; and write the first interrupt information into a register in the interrupt controller, which controls the second virtual central processing unit to execute the interrupt handler.

In some embodiments, as shown in FIG. 14, on the basis of the embodiment shown in FIG. 9, the virtual interrupt control module 903 may include a write unit 1401 and a control unit 1402.

The write unit 1401 is configured to write, in response to that the target configuration information includes second interrupt information, the second interrupt information into a register in the interrupt controller.

The control unit 1402 is configured to control the first virtual central processing unit to execute the interrupt handler by using the interrupt controller, wherein the second virtual central processing unit and the first virtual central processing unit are a same virtual central processing unit.

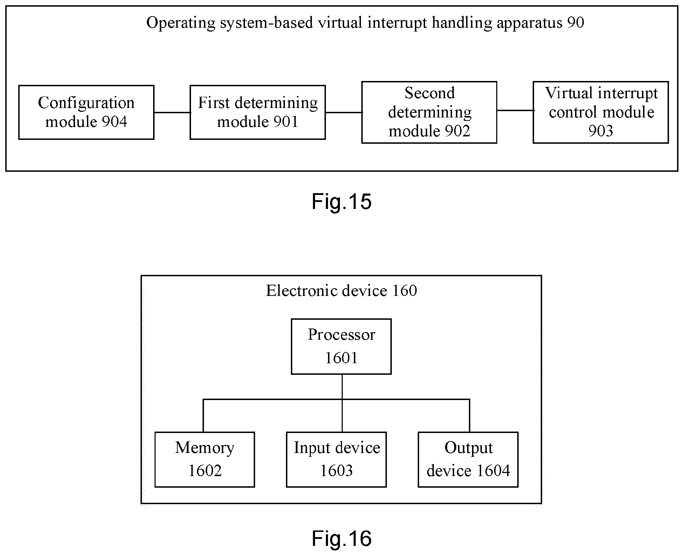

In some embodiments, as shown in FIG. 15, on the basis of the embodiment shown in FIG. 9, the operating system-based virtual interrupt handling apparatus 90 further includes a configuration module 904.

The configuration module 904 is configured to invoke, during initialization of a virtual machine, an operating system kernel through a user mode component of an operating system to configure the interrupt configuration information in the operating system kernel.

Regarding the operating system-based virtual interrupt handling apparatus in the foregoing embodiments, specific manners for each module to perform operations and corresponding beneficial effects have been described in detail in the corresponding embodiments of the operating system-based virtual interrupt handling method, and reference may be made to the corresponding operation execution manners and the beneficial technical effects in the part of exemplary method described above, and details are not described herein again.

### Exemplary electronic device

FIG. 16 is a schematic diagram of a composition and structure of an electronic device according to an exemplary embodiment of this disclosure. As shown in FIG. 16, an electronic device 160 includes one or more processors 1601 and a memory 1602.

The processor 1601 may be a central processing unit (CPU) or another form of processing unit having a data processing capability and/or an instruction execution capability, and may control another component in the electronic device 160 to implement a desired function.

The memory 1602 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1601 may execute the program instruction to implement the operating system-based virtual interrupt handling method according to various embodiments of this disclosure that are described above and/or other desired functions.

In an example, the electronic device 160 may further include an input device 1603 and an output device 1604. These components are connected to each other through a bus system and/or another form of connection mechanism (not shown).

Certainly, for simplicity, FIG. 16 shows only some of components in the electronic device 160 that are related to this application, and components such as a bus and an input/output interface are omitted. In addition, according to specific application situations, the electronic device 160 may further include any other appropriate components.

### Exemplary computer program product and computer readable storage medium

In addition to the foregoing method and device, the embodiments of this application may also relate to a computer program product, which includes computer program instructions. When the computer program instructions are run by a processor, the processor is enabled to perform the steps of the operating system-based virtual interrupt handling method according to the embodiments of this application, that are described in the "exemplary method" part of this specification.

The computer program product may be program code, written with one or any combination of a plurality of programming languages, that is configured to perform the operations in the embodiments of this application. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this application may further relate to a computer readable storage medium, which stores computer program instructions. When the computer program instructions are run by the processor, the processor is enabled to perform the steps, of the operating system-based virtual interrupt handling method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this application are described above in combination with specific embodiments. However, it should be pointed out that the advantages, superiorities, and effects mentioned in this application are merely examples but are not for limitation, and it cannot be considered that these advantages, superiorities, and effects are necessary for each embodiment of this application. In addition, specific details described above are merely for examples and for ease of understanding, rather than limitations. The details described above do not limit that this application must be implemented by using the foregoing specific details.

The block diagrams of the equipment, the apparatus, the device, and the system involved in this application are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

It should be further pointed out that, various components or various steps in the apparatus, the device, and the method of this application may be disassembled and/or recombined. These disassembling and/or re-combinations shall be regarded as equivalent solutions of this application.

The foregoing description about the disclosed aspects is provided, so that this application can be arrived at or carried out by any person skilled in the art. Various modifications to these aspects are very obvious to a person skilled in the art, and, general principles defined herein may be applicable to other aspects without departing from the scope of this application. Therefore, this application is not intended to be limited to the aspects illustrated herein, but to the widest scope consistent with the principles and novel features disclosed herein.

The foregoing descriptions are given for illustration and description. In addition, the description is not intended to limit the embodiments of this application to forms disclosed herein. Although a plurality of exemplary aspects and embodiments have been discussed above, a person skilled in the art may recognize certain variations, modifications, changes, additions, and subcombinations thereof.

## Claims

1. An operating system-based virtual interrupt handling method, **characterized in that** the operating system-based virtual interrupt handling method comprises
determining (301) a first virtual central processing unit currently running;
determining (302) target configuration information corresponding to an interrupt request from pre-configured interrupt configuration information; and
controlling (303) a second virtual central processing unit to execute an interrupt handler by using an interrupt controller based on the first virtual central processing unit and the target configuration information.

2. The method according to claim 1, wherein the determining target configuration information corresponding to an interrupt request from pre-configured interrupt configuration information comprises:
determining (3021) an interrupt identifier corresponding to the interrupt request;
determining (3022) an interrupt type based on the interrupt identifier; and
determining (3023) the target configuration information from the interrupt configuration information based on the interrupt type and the interrupt identifier.

3. The method according to claim 2, wherein the determining the target configuration information from the interrupt configuration information based on the interrupt type and the interrupt identifier comprises:
determining sub-configuration information corresponding to the interrupt type from the interrupt configuration information based on the interrupt type; and
determining the target configuration information from the sub-configuration information corresponding to the interrupt type based on the interrupt identifier.

4. The method according to any one of claims 1 to 3, wherein the controlling a second virtual central processing unit to execute an interrupt handler by using an interrupt controller based on the first virtual central processing unit and the target configuration information comprises:
in response to that the target configuration information comprises the second virtual central processing unit, determining (3031) an inclusion relationship between the first virtual central processing unit and the second virtual central processing unit; and
controlling (3032) the second virtual central processing unit to execute the interrupt handler by using the interrupt controller based on the inclusion relationship and the target configuration information.

5. The method according to claim 4, wherein
the controlling the second virtual central processing unit to execute the interrupt handler by using the interrupt controller based on the inclusion relationship and the target configuration information comprises:
in response to that the inclusion relationship indicates that the first virtual central processing unit is same as the second virtual central processing unit, controlling (601) the second virtual central processing unit to execute the interrupt handler by using the interrupt controller based on the target configuration information.

6. The method according to claim 4, wherein the controlling the second virtual central processing unit to execute the interrupt handler by using the interrupt controller based on the inclusion relationship and the target configuration information comprises:
storing (602) the target configuration information in response to that the inclusion relationship indicates that the first virtual central processing unit is different from the second virtual central processing unit; and
in response to that the virtual central processing unit currently running is switched from the first virtual central processing unit to the second virtual central processing unit, controlling (603) the second virtual central processing unit to execute the interrupt handler by using the interrupt controller based on the target configuration information.

7. The method according to claim 5 or 6, wherein the controlling the second virtual central processing unit to execute the interrupt handler by using the interrupt controller based on the target configuration information comprises:
determining first interrupt information in the target configuration information; and
writing the first interrupt information into a register in the interrupt controller, so that the interrupt controller controls the second virtual central processing unit to execute the interrupt handler.

8. The method according to any one of claims 1 to 3, wherein the controlling a second virtual central processing unit to execute an interrupt handler by using an interrupt controller based on the first virtual central processing unit and the target configuration information comprises:
in response to that the target configuration information comprises second interrupt information, writing (3033) the second interrupt information into a register in the interrupt controller; and
controlling (3034) the first virtual central processing unit to execute the interrupt handler by using the interrupt controller, wherein the second virtual central processing unit and the first virtual central processing unit are a same virtual central processing unit.

9. The method according to any one of claims 1 to 3, wherein the method further comprises:
during initialization of a virtual machine, invoking (304) an operating system kernel through a user mode component of an operating system to configure the interrupt configuration information in the operating system kernel.

10. An operating system-based virtual interrupt handling apparatus (90), **characterized in that** the operating system-based virtual interrupt handling apparatus comprises:
a first determining module (901), configured to determine a first virtual central processing unit currently running;
a second determining module (902),, configured to determine target configuration information corresponding to an interrupt request from pre-configured interrupt configuration information; and
a virtual interrupt control module (903), configured to control a second virtual central processing unit to execute an interrupt handler by using an interrupt controller based on the first virtual central processing unit and the target configuration information.

11. The operating system-based virtual interrupt handling apparatus (90) according to claim 10, wherein the second determining module (902) comprises a first determining unit (1001), a second determining unit (1002), and a third determining unit (1003), wherein
the first determining unit (1001) is configured to determine an interrupt identifier corresponding to the interrupt request;
the second determining unit (1002) is configured to determine an interrupt type based on the interrupt identifier; and
the third determining unit (1003) is configured to determine the target configuration information from the interrupt configuration information based on the interrupt type and the interrupt identifier.

12. The operating system-based virtual interrupt handling apparatus (90) according to claim 10, wherein the virtual interrupt control module (903) comprises a fourth determining unit (1201) and a virtual interrupt control unit (1202), wherein
the fourth determining unit (1201) is configured to determine an inclusion relationship between the first virtual central processing unit and the second virtual central processing unit in response to that the target configuration information includes the second virtual central processing unit; and
the virtual interrupt control unit (1202) is configured to control the second virtual central processing unit to execute the interrupt handler by using the interrupt controller based on the inclusion relationship and the target configuration information.

13. The operating system-based virtual interrupt handling apparatus (90) according to claim 10, wherein the virtual interrupt control unit (1202) comprises a first virtual interrupt control subunit (1301) and a second virtual interrupt control subunit (1302), wherein
the first virtual interrupt control subunit (1301) is configured to control, in response to that the inclusion relationship indicates that the first virtual central processing unit is same as the second virtual central processing unit, the second virtual central processing unit to execute the interrupt handler by using the interrupt controller based on the target configuration information.
the second virtual interrupt control subunit (1302) is configured to store the target configuration information in response to that the inclusion relationship indicates that the first virtual central processing unit is different from the second virtual central processing unit; and in response to that the virtual central processing unit currently running is switched from the first virtual central processing unit to the second virtual central processing unit, control the second virtual central processing unit to execute the interrupt handler by using the interrupt controller based on the target configuration information.

14. A computer readable storage medium, **characterized in that** the storage medium stores a computer program, and the computer program is used for implementing the operating system-based virtual interrupt handling method according to any one of claims 1 to 9.

15. An electronic device (160), **characterized in that** the electronic device comprises:
a processor (1601); and
a memory (1603), configured to store a processor-executable instruction, wherein
the processor is configured to read the executable instruction from the memory, and execute the instruction to implement the operating system-based virtual interrupt handling method according to any one of claims 1 to 9.
